**Europäisches Patentamt**

**European Patent Office**

**Office européen des brevets**

(11) Veröffentlichungsnummer: **0 054 763**

**B2**

(12) # NEUE EUROPÄISCHE PATENTSCHRIFT

(45) Veröffentlichungstag der neuen Patentschrift: **04.10.89**

(51) Int. Cl.⁴: **B 25 J 9/00**

(21) Anmeldenummer: **81110010.6**

(22) Anmeldetag: **30.11.81**

(54) Getriebeanordnung für einen mit dem Ausleger eines Manipulators verbundenen Gelenkkopf.

(30) Priorität: **19.12.80 DE 3048067**

(43) Veröffentlichungstag der Anmeldung:
**30.06.82 Patentblatt 82/26**

(45) Bekanntmachung des Hinweises auf die Patenterteilung:
**12.09.84 Patentblatt 84/37**

(45) Bekanntmachung des Hinweises auf die Entscheidung über den Einspruch:
**04.10.89 Patentblatt 89/40**

(84) Benannte Vertragsstaaten:
**AT CH DE FR GB IT LI SE**

(56) Entgegenhaltungen:
**EP-A-0 044 548**
**DE-A-2 226 407**
**DE-A-2 330 393**
**DE-A-2 435 156**
**DE-A-2 717 870**
**DE-C-2 402 829**
**FR-A-2 450 673**
**FR-B-1 050 374**
**JP-A-50 047 167**
**JP-A-51 014 653**
**JP-A-52 076 070**
**US-A-2 822 094**

(73) Patentinhaber: **KUKA Schweissanlagen & Roboter GmbH, Blücherstrasse 144, D-8900 Augsburg (DE)**

(72) Erfinder: **Zimmer, Ernst, Michael- Steinherr- Strasse 34, D-8904 Friedberg (DE)**

(74) Vertreter: **Ernicke, Hans- Dieter, Dipl.- Ing., Schwibbogenplatz 2b, D-8900 Augsburg (DE)**

EP 0 054 763 B2

## Beschreibung

Die Erfindung bezieht sich auf eine Getriebeanordnung für einen mit dem Ausleger eines Manipulators verbundenen Gelenkkopf, der aus einem um die Längsachse des Auslegers drehbaren Basisgehäuse, einem am Basisgehäuse um eine quer zur Langsachse schwenkbar gelagerten Gelenkgehäuse und aus einem im Gelenkgehäuse quer zu dessen Gelenkachse gelagerten, das Werkzeug aufnehmenden Tragkörper besteht.

Eine solche Anordnung ist aus der DE-B-2 402 829 bekannt. Die weiterhin in dieser Schrift offenbarten und bei der Erfindung angewandten Mittel sind im Oberbegriff des Hauptanspruches enthalten.

Zur Definitionsvereinfachung sei der vorbekannte und auch der erfindungsgemässe Ausleger einschliesslich Gelenkkopf mit einem menschlichen Arm, dem Handgelenk und dem ausgestreckten Zeigefinger verglichen. Danach entspricht das Basisgehäuse dem ausgestreckten Arm, der um seine Längsache verdrehbar ist. Das Gelenkgehäuse entspricht der Hand, die um das Handgelenk, also um eine zur Armachse quer liegende Achse verschwenkbar ist. Der Tragkörper entspricht dem ausgestreckten Finger, der zufolge seiner Anordnung an der Hand die Schwenkbewegung der Hand mit vollzieht, aber um seine eigene Längsachse zusätzlich drehbar ist.

Zum Antrieb von Arm, Hand und Finger werden drei Elektro- oder Hydraulikmotore verwendet, deren Antriebszüge koaxial in das Basisgehäuse in Form von Hohlwellen geleitet und von dort auf die Abtriebsorgane getriebetechnisch umgesetzt werden. Hierzu ist es erforderlich, die Gelenkachse (Handgelenk) getriebetechnisch zu umgehen, indem Winkeltriebe von den in der Längsache sich erstreckenden Antriebswellen über die Gelenkachse auf die Abtriebswellen einwirken. Beim Stand der Technik (DE-B-2 619 336) wird darüber hinaus eine parallel zur Gelenkachse gelagerte Zwischenwelle vorgesehen, die mit der Gelenkachse über zwei Stirnräder verbunden ist, um von der Zwischenwelle aus die Abtriebswelle für den Tragkörper (Finger) anzutreiben.

Wenn man von schnellaufenden Antriebsmotoren ausgeht, müssen in die Getriebezüge Untersetzungsgetriebe eingebaut werden. Bei der DE-B-2 619 336 sind diese Untersetzungsgetriebe unmittelbar hinter den Antriebsmotoren an deren Ritzeln angeordnet. Das in diesen Untersetzungen vorhandene Getriebespiel überlagert sich mit dem Spiel der nachfolgenden Antriebsteile bis zur Abtriebswelle, so dass die Genauigkeit und Wiederholbarkeit der rechnerisch vorgegebenen Bewegungsstrecke der einzelnen Glieder um das Mass des summierten Spiels beeinträchtigt wird.

Beim genannten Stand der Technik ist ausserdem die Zwischenwelle zwischen der Gelenkachse und dem Tragkörper angeordnet, wodurch eine erhebliche Distanz der Gelenkachse vom Tragkörper bedingt ist. Da der Schwerpunkt des am Tragkörper befestigten Werkzeuges noch in einer notwendigen Distanz vom Tragkörper gelegen sein muss, ergibt sich folglich ein betrachtlicher Hebelarm vom genannten Schwerpunkt bis zur Gelenkachse, der ein höheres Drehmoment für die Schwenkung des Gelenkgehäuses (Hand) bedingt, was durch das Gewicht der Zwischenwelle, ihrer Lagerung und ihrer Antriebsteile sich entsprechend erhöht.

Schliesslich wird bei der vorbekannten Konstruktion das Basisgehäuse (Arm) von dem daran gelagerten Gelenkgehäuse (Hand) mit erheblicher Ausspannung umgriffen, woraus sich ein klobiger Gelenkkopf ergibt, der das Heranführen des am Tragkörper befestigten Werkzeuges an schwer zugängliche Stellen erschwert.

Bei einer deren vorbekannten Konstruktion nach der DE-B-2 402 829 wird das Gelenkgehäuse (Hand) vom Basisgehäuse (Arm) in ebenso ausladender Weise umgriffen und zwar deswegen, weil zwischen dem verhältnismässig schmalen Gelenkgehäuse und der Seitenwand des Basisgehäuses zwei parallel zur Längsachse sich erstreckende Zwischenwellen vorhanden sind, die über Stirn- und Kegelräder den Abtrieb des Gelenkgehäuses und des Tragkörpers herbeiführen. Auch bei dieser Konstruktion sind die Untersetzungen antriebsseitig vorgesehen, was gleichfalls zur Spielüberlagerung der einzelnen Getriebeteile führt.

Durch die JP-GM-50-47 167 ist schließlich ein Gelenkkopf bekannt geworden, bei dem der Antrieb für den Tragkörper und für das Gelenkgehäuse auf je einer Zwischenwelle verzweigt wird, die auf der dem Tragkörper abgekehrten Seite der Schwenkachse des Gelenkgehäuses liegt. Diese Konstruktion macht jedoch ein doppelwandiges Basisgehäuse wegen der Lagerung der beiden Zwischenwelle erforderlich. Weil beim bekannten Gelenkkopf keine Untersetzungsgetriebe vorhanden sind, ergeben sich die gleichen Nachteil wie bei der DE-B-2 139 336.

Der Erfindung liegt die Aufgabe zugrunde, eine Getriebeanordnung für einen mit dem Ausleger eines Manipulators verbundenen Gelenkkopf zu finden, die eine wesentlich genauere Ausführung der rechnerisch vorgegebenen Bewegungen, ein kleineres Drehmoment für die Schwenkbewegung des Gelenkgehäuses und eine schlankere Ausbildung des Gelenkkopfes zu erzielen gestattet, ohne dass ein getriebetechnischer Mehraufwand bzw. Erschwernis der Montage und Wartung in Kauf zu nehmen sind.

Ausgehend von der DE-B-2 402 829 besteht die Erfindung aus den im Kennzeichnungsteil des Anspruches 1 angegebenen Merkmalen.

Durch die Anordnung der Untersetzungsgetriebe an den einzelnen Abtriebswellen wird das zwischen den Antriebsmotoren und den Untersetzungsgetrieben vorhandene summierte Spiel durch die Grösse der Untersetzung geteilt, was zur Folge hat, dass das Getriebespiel praktisch nicht die genaue Ausführung der rechnerisch vorgegebenen Bewegung beeinträchtigt, Trotz der Anordnung der Untersetzungsgetriebe an den Abtriebswellen ist es gelungen, den Gelenkkopf wesentlich schlanker und kleiner als bei den angegebenen vorbekannten Konstruktionen zu bauen. Dies wird beim Gegenstand der Erfindung auch dadurch erreicht, dass die Zwischenwelle an der dem Tragkörper abgekehrten Seite, bezogen auf die Gelenkachse (Handgelenk) angeordnet ist. Durch diese Massnahme kann die Gelenkachse in einer minimalen Entfernung vom Tragkörper gelagert sein, wodurch der Hebelarm, nämlich die Distanz der Gelenkachse vom Schwerpunkt des Werkzeuges verringert und das aufzubringende Drehmoment verkleinert wird.

Schliesslich wird ein beträchtlicher Fortschritt dadurch erzeugt, dass die in der Zwischenwellenachse und in der Gelenkachse angeordneten Wellen geteilt und gegenseitig gelagert sind, wodurch es möglich wurde, auf der einen Seite der Zwischenwelle den Abtrieb zum Tragkörper und auf der anderen Seite der Zwischenwelle den Abtrieb zum Gelenkgehäuse vorzusehen, wobei die Zwischenwelle im Basisgehäuse unmittelbar bzw. mittelbar gelagert ist.

Aufgrund dieser Grundkonzeption ergibt sich weiterhin der Vorteil, daß das Basisgehäuse mit seinen Lagerschilden sehr schmal gebaut werden kann und an der Aussenseite der Lagerschilde die dort vorgesehenen Zahnriementriebe von aussen leicht zugänglich sind. Für den Fall eines Riemenschadens ist dieser leicht zu beseitigen, weil die Riemen nach Abnahme der Deckwände ohne Demontage irgendwelcher Getriebeteile ab- und aufgezogen werden können.

Die Merkmale des Anspruches 3 bringen den Vorteil mit sich, dass der von zwei konzentrisch zueinander gelagerten Kegelrädern unterschiedlichen Durchmessers gebildete Distanzraum zwischen dem Zahnkranz des kleineren zu demjenigen des grösseren Kegelrades für die Anordnung eines Doppellagers für die kürzere Zwischenwelle ausgenutzt werden kann, deren Lagerung damit eindeutig bestimmt ist. Folglich kann das in diesem Doppellagergeführte Kegelrad mit seiner Nabe die längere Zwischenwelle stützen, die folglich am Lagerschild nur ein einfaches, also platzsparendes Lager benötigt. Die gleiche Konstruktion ist auch im Bereiche der Gelenkachse vorgesehen. Aus beiden ergibt sich eine nicht unbeträchtliche Verringerung der Gelenkkopfbreite.

Mit den Ansprüchen 5 bis 8 wird die Ausgestaltung der erfindungsgemässen Getriebeanordnung an der dem Gelenkkopf abgekehrten Seite, bezogen auf das Schwenklager des Auslegers, gezeigt, die es möglich macht, den gesamten Antrieb entlang der Längsachse des Auslegers anzuordnen, dadurch den Ausleger in seinem Schwerpunkt gelenkig zu lagern und Gewichtsausgleich vorzunehmen. Beim Stand der Technik nach der DE-B-2 619 336 sind die Antriebsmotore unmittelbar in dem das Basisgehäuse führenden Gehäuse untergebracht, was dazu führt, dass die Längsachse des Gelenkkörpers etwa im rechten Winkel zum Auslegerarm steht, der folglich zusätzliche Gegengewichte benötigt.

Mit den Merkmalen des Anspruches 6 ist der Vorteil gegeben, antriebsseitig die maximale Grösse der zu erzugenden Bewegung zu begrenzen. Mit Hilfe der im Antriebsgehäuse vorhandenen Untersetzungsgetriebe wird nämlich ein der tatsächlichen Abtriebsbewegung proportionales oder identisches Bewegungsbild erzeugt, das mit Hilfe von Endanschlägen oder dgl. kontrolliert und begrenzt werden kann. Die Merkmale des Anspruches 7 erweisen sich hierbei als vorteilhaft, weil ein kleinerer Winkelbereich des Kontrollgetriebes mehr Raum für die Anordnung von Endschaltern oder dgl. bietet.

Der Gegenstand des Anspruches 8 hat zur Folge, dass das Gesamtgewicht des Auslegers verringert und besondere Gegengewichte eingespart werden können, weil durch die Bemessung des Antriebsgehäuses und dessen Ausbildung aus z. B. Sphäroguss das notige Gegengewicht zu demjenigen des Gelenkkopfes bildet, so dass die übrigen Gehäuseteile aus Leichtmetall bestehen können.

Einzelheiten der Erfindung ergeben sich aus der Zeichnung. In ihr ist die Erfindung schematisch und beispielsweise dargestellt.

Es zeigen:

Fig. 1 eine Seitenansicht eines Manipulators mit einem die erfindungsgemässe Getriebeanordnung enthaltenden Ausleger,

Fig. 2 einen Längsschnitt entlang der Linie A - A durch den Gelenkkopf des Auslegers gemäss Fig. 1,

Fig. 2a einen Längsschnitt gemäss Fig. 2 in vergrösserter Darstellung,

Fig. 3 einen Längsschnitt entlang der Linie B - B durch das Motorgehäuse des Auslegers gemäss Fig. 1, und

Fig. 4 einen Längsschnitt entlang der Linie C - C durch das Motorgehäuse gemäss Fig. 3.

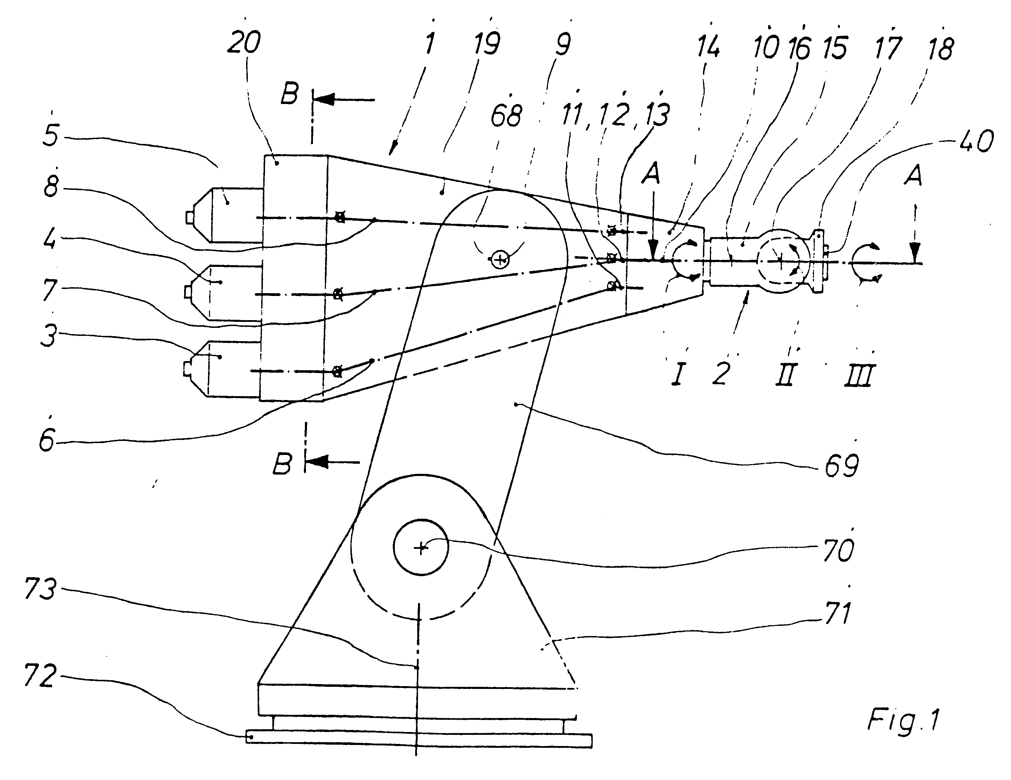

Der in Fig. 1 dargestellte Manipulator geht von einem um eine horizontale Schwenkachse 9 drehbaren Ausleger 1 aus, der an einem Lenker 69 gelagert ist, welcher seinerseits um die horizontale Schwenkachse 70 des Grundkörpers 71 drehbar ist. Dieser Grundkörper 71 ist um eine vertikale Schwenkachse 73 am Fundament 72 gelagert. Durch die Achsen 73, 70 und 9 ergeben sich somit drei Freiheitsgrade, denen sich weitere drei Freiheitsgrade anschliessen, die mit den Bewegungspfeilen I, II und III am Ausleger 1 angedeutet sind.

Der Ausleger 1 weist ein Auslegermittelstück 19 und eine Ausleger-Ansatzgehäuse 14 entlang der Längsachse 10 auf, die miteinander starr verbunden und bei 9 gelagert sind und beispielsweise aus Leichtmetallguss bestehen können. Auf der einen seite der Schwenkachse 9 ist an dem Ausleger 1 ein Antriebsgehäuse 20 angeordnet, das beim Ausführungsbeispiel so dimensioniert und beschaffen ist, dass es ein Gegengewicht zu einem an der anderen Seite des Auslegers 1 angeordneten Gelenkkopf 2 bildet. Das Antriebsgehäuse 20 kann beispielsweise aus Sphäroguss bestehen. Mit ihm sind die Antriebsmotoren 3, 4, 5 verbunden, welche über Kreuzgelenkwellen 6, 7, 8 zu den Antriebswellen 11, 12, 13 am Ausleger-Ansatzgehäuse 14 geführt sind. Dabei ist darauf zu achten, dass die mittlere Kreuzgelenkwelle 7 etwas aussermittig verlegt ist, damit sie an der die Schwenkachse 9 bestimmenden Welle 68 mit geringem Abstand vorbeigeführt werden kann.

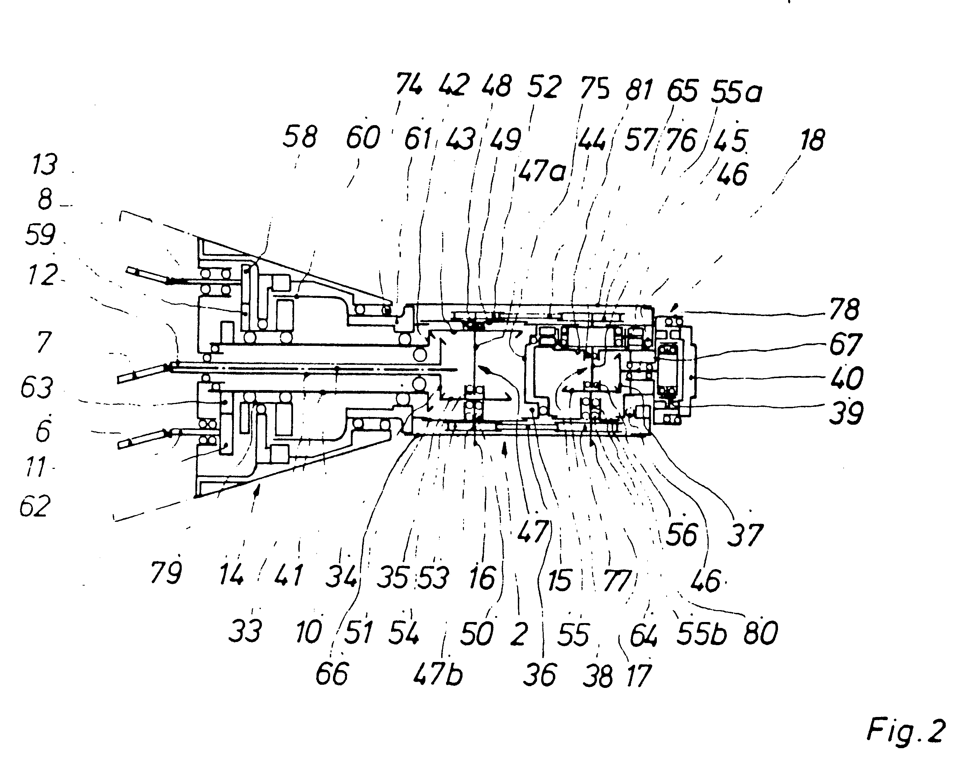

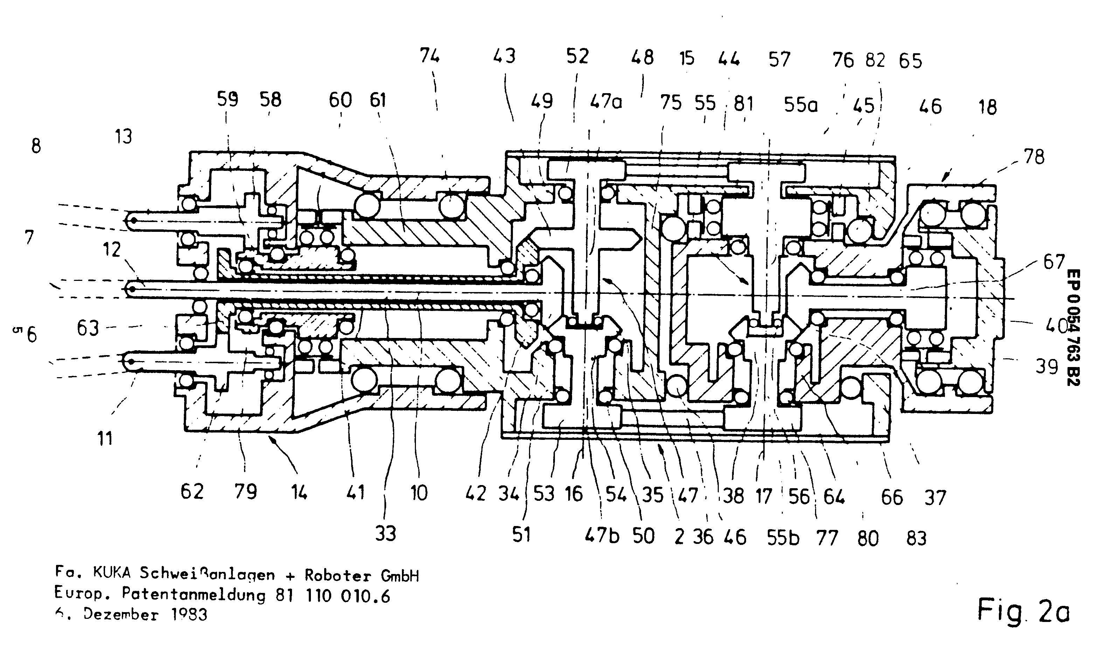

In dem Ausleger-Ansatzgehäuse 14 treiben die Antriebswellen 11, 13 koaxiale Hohlwellen 41, 79 (vgl. Fig. 2) an. Die Antriebswelle 12 erfährt, koaxial in Hohlwellen 41 und 79 gelagert, ihre Fortsetzung in Welle 33. Da zwischen den Antriebsmotoren 3, 4, 5 und den Antriebswellen 11, 12, 13 keine Untersetzung vorgesehen ist, können die Kreuzgelenkwellen 6, 7, 8 wegen des zu übertragenden geringen Drehmomentes klein und gewichtssparend ausgebildet werden.

Am Ausleger-Ansatzgehäuse 14 ist der Gelenkkopf 2 geführt. Dies geschieht beim Ausführungsbeispiel der Fig. 1, 2 und 2a dadurch, dass im Ansatzgehäuse 14 ein Basisgehäuse 15 um die Längsachse 10 drehbar gelagert und über den Motor 5 und die Kreuzgelenkwelle 8 angetrieben ist, woraus sich der Freiheitsgrad entsprechend dem Pfeil I ergibt. Am Basisgehäuse 15 ist um die Gelenkachse 17 ein Gelenkgehäuse 18 schwenkbar gelagert und über den Motor 3 mit der Kreuzgelenkwelle 6 angetrieben, so dass sich ein Freiheitsgrad des Gelenkgehäuses 18 entsprechend dem Pfeil II ergibt. Im Gelenkgehäuse 18 ist ein Tragkörper 40 um seine Längsachse gelagert und über den Motor 4 und die Kreuzgelenkwelle 7 angetrieben, was zum Freiheitsgrad gemäss Pfeil III führt.

Im Gelenkkopf 2 ist mit 16 eine Zwischenwellenachse bezeichnet, deren Funktion im Ausführungsbeispiel der Fig. 2 und 2a beschrieben ist.

In Fig. 2 sind die Antriebszüge für das Basisgehäuse, das Gelenkgehäuse und den Tragkörper symbolhaft dargestellt. Eine Verdeutlichung ergibt sich aus der vergrösserten Darstellung in Fig. 2a.

## Antriebszug für das Basisgehäuse 15

Die in Fig. 1 dargestellte Kreuzgelenkwelle 8 ist mit der Antriebswelle 13 verbunden, welche ihrerseits im Ausleger-Ansatzgehäuse 14 gelagert ist. Über die Zahnräder 58, 59 wird die Abtriebswelle 61 des Basisgehäuses 15 angetrieben, wobei mit 60 ein Untersetzungsgetriebe bezeichnet ist, das an der Abtriebswelle 61 sitzt und eine hohe Untersetzung zu erzeugen gestattet. Die Untersetzung kann beispielsweise zwischen 70 : 1 und 120 : 1 liegen. Hierfür sind herkömmliche Getriebe anwendbar, die beispielsweise als Harmonic-Drive, Cyclo-Getrieb oder dgl. bezeichnet sind. Die Abtriebswelle 61 ist im Doppellager 74 am Ansatzgehäuse 14 geführt. Mit der Abtriebswelle 61 ist starr das Basisgehäuse 15 verbunden, welches im wesentlichen aus den die Seitenwände bildenden Lagerschilden 49, 51, 82, 83, den Abdeckwänden 65 und 66 sowie dem Quersteg 75 besteht. Dieses Basisgehäuse 15 ist also um die Längsachse 10 des Auslegers 1 rotierfähig.

## Antriebszug für das Gelenkgehäuse 18

Wie bereits zu Fig. 1 dargestellt, soll das Gelenkgehäuse 18 am Basisgehäuse 15 um die Gelenkachse 17 schwenkbar gelagert und angetrieben werden. Hierzu wird die mit der Kreuzgelenkwelle 6 verbundene Antriebswelle 11 verwendet, die im Ausleger-Ansatzgehäuse 14 gelagert ist und über die Zahnräder 62, 63 eine Hohlwelle 41 antreibt, welche ihrerseits innerhalb der Antriebswelle 61 für das Basisgehäuse 15 koaxial gelagert ist. Am Ende dieser Hohlwelle 41 sitzt ein Kegelrad 42, das mit einem um die Achse 16 (vgl. Fig. 1) rotierenden Kegelrad 43 kämmt. Das diesem Kegelrad 43 zugeordnete Wellenteil 47a der Zwischenwelle 47 ist auf der einen Seite im Lagerschild 49 des Basisgehäuses 15 einfach gelagert. Die gegenüberliegende Lagerung wird später beschrieben. Das Wellenteil 47a erstreckt sich durch das Einfachlager 48 des Lagerschildes 49 und trägt auf der Aussenseite des Lagerschildes 49 ein Riemenrad 52, das über einen Zahnriementrieb 44 auf ein konzentrisch zur Gelenkachse 17 angeordnetes Riemenrad 76 antreibt. Auf dem mit dem Riemenrad 76 verbundenen Antriebswellenteil 55a befindet sich ein Untersetzungsgetriebe 45, dessen Untersetzung ebenfalls vorzugsweise in der Grössenordnung 70 : 1 bis 120 : 1 sein soll. Das Abtriebsrad dieses Untersetzungsgetriebes 45 ist ortsfest mit dem Gelenkgehäuse 18 verbunden, wohingegen das Antriebswellenteil 55a im Lagerschild 81 des Gelenkgehäuses 18 im Lager 57 drehbar gelagert ist. Das Gelenkgehause 18 ist über die Lager 46 am Basisgehäuse 15 um die Gelenkachse 17 drehbar geführt. Das Gelenkgehäuse 18 ragt durch eine stirnseitige Aussparung des Basisgehäuses 15 nach aussen, wobei die Aussparung so beschaffen ist, dass ein grosser Schwenkweg des Gelenkgehäuses 18 mit seinem nach aussen vorstehenden Teil um die Gelenkachse 17 ermöglicht wird.

## Antriebszug für den Tragkörper 40

Die in Fig. 1 dargestellte Kreuzgelenkwelle 7 ist mit der koaxial zur Längsachse 10 angeordneten Antriebswelle 12, 33 verbunden, die in der Hohlwelle 41 gelagert ist. Am Ende der Welle 33, welche das Kegelrad 42 durchdringt, sitzt ein Kegelrad 34, das mit dem um die Zwischenwellenachse 16 rotierenden Kegelrad 35 zusammenwirkt. Dieses Kegelrad 35 sitzt auf dem kürzeren Wellenteil 47b der Zwischenwelle 47. Dieses kürzere Wellenteil 47b ist über ein Doppellager 50 im Lagerschild 51 des Basisgehäuses 15 kippfrei gelagert und trägt an der Aussenseite des Lagerschildes 51 ein Riemenrad 53, welches über den Zahnriementrieb 36 auf ein um die Gelenkachse 17 rotierendes Riemenrad 77 einwirkt.

Die Nabe des auf dem kürzeren Wellenteil 47b sitzenden Kegelrades 35 trägt ein Einfachlager 54, in dem das längere Wellenteil 47a der Zwischenwelle 47 gelagert ist. Das Doppellager 50 kann unter voller Ausnutzung des durch den Durchmesserunterschied der Kegelräder 42, 34 gebildeten freien Raumes kompakt gestaltet werden, so dass eine einwandfreie Zentrierung und Führung des längeren Wellenteiles 47a gewährleistet ist. Zugleich wird dadurch erheblicher Platz entlang der Achse 16 der Zwischenwelle 47 eingespart.

Das angetriebene Riemenrad 77 sitzt auf einem kürzeren Antriebswellenteil 55b der um die Gelenkachse 17 rotierenden Antriebswelle 55. Dieses kürzere Antriebswellenteil 55b ist wiederum über ein Doppellager 64 im Lagerschild 80 des Gelenkgehäuses 18 gelagert und trägt ein Kegelrad 30, welches mit dem auf der Antriebswelle 67 des Tragkörpers 40 sitzenden Kegelrad 37 zusammenwirkt. Zufolge des Doppellagers 64 kann die Nabe des Kegelrades 38 als Lager 56 für den längeren Antriebswellenteil 55a (der Antriebswelle des Gelenkgehäuses 18) ausgebildet werden. Die Antriebswelle 67 des Tragkörpers 40 ist im Gelenkgehäuse 18 gelagert und trägt ein Untersetzungsgetriebe 39, an dem abtriebsseitig der Tragkörper 40 befestigt ist. Dieser Tragkörper 40 ist seinerseits in dem über das Basisgehäuse 15 hinausstehenden Teil 78 des Gelenkgehäuses 18 gelagert. Der Tragkörper 40 führt also bei der in Fig. 2 gezeigten Grundstellung eine Drehbewegung um die Längsachse 10 aus. Da aber der Tragkörper 40 bei 78 im Gelenkgehäuse 18 gelagert ist, schwenkt der Tragkörper 40 mit dem Gelenkgehäuse 18 um die Gelenkachse 17, so dass dann bei ausgeschwenkter Stellung der Tragkörper 40 zwar nach wie vor um die Antriebswelle 67, aber nicht mehr um die Längsachse 10 rotiert.

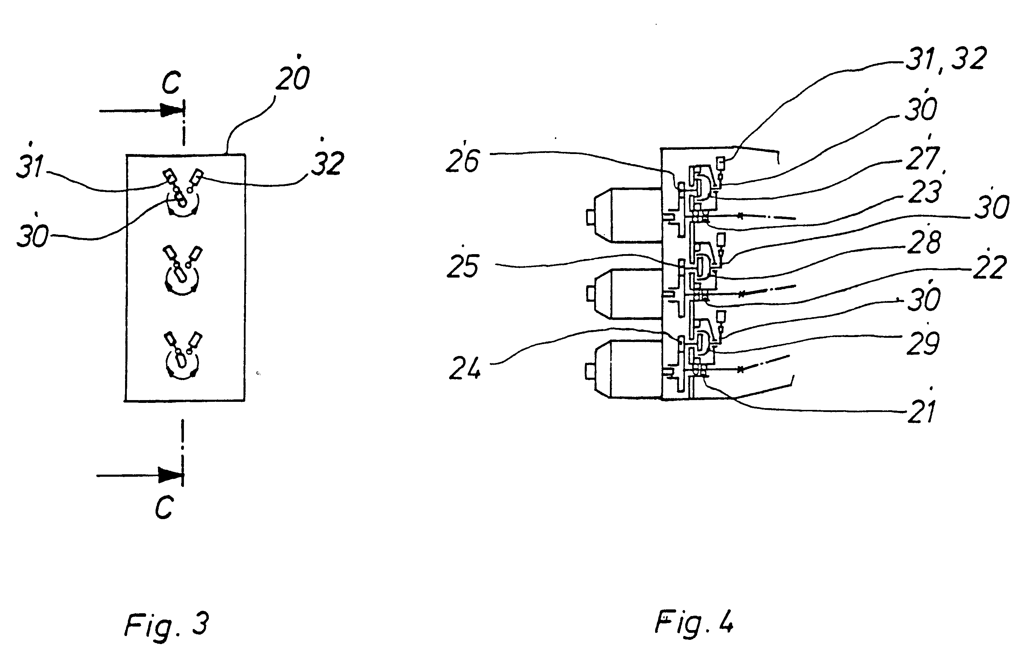

Im Beispiel der Fig. 4, das einen Schnitt C - C durch das Antriebsgehäuse 20 gemäss Fig. 3 zeigt, ist eine Anordnung dargestellt, mit deren Hilfe die einzelnen Bewegungen des Basisgehäuses 15, des Gelenkgehäuses 18 und des Tragkörpers 40 kontrolliert und begrenzt werden können. Die Antriebsmotoren 3, 4, 5 sind, wie zu Fig. 1 bereits dargestellt worden ist, mit Kreuzgelenkwellen 6, 7, 8 verbunden. Hierzu dienen die Endlagerungen 21, 22, 23, vor denen antriebsseitig Zahnriementriebe 24, 25, 26 vorgesehen sind, die auf Kontrollgetriebe 27, 28, 29 mit starker Untersetzung einwirken.

Es kann bei den Kontrollgetrieben 27, 28, 29 die gleiche Untersetzung wie bei den Untersetzungsgetrieben 39, 45, 60 (vgl. Fig. 2) vorgesehen sein, allerdings empfiehlt es sich, eine noch stärkere Untersetzung zu wählen, beispielsweise dahingehend, dass 360° Drehbewegung des Basisgehäuses 15, des Gelenkgehäuses 18 bzw. des Tragkörpers 40 etwa 300° Drehung an der Abtriebsseite der Kontrollgetriebe 27, 28, 29 entsprechen. Die Erfindung ist auf dieses Verhältnis keineswegs beschränkt.

Die Abtriebsseite des einzelnen Kontrollgetriebes 27, 28, 29 wirkt nun über einen Schaltnocken 30 auf Schalter 31, 32, die als Endschalter ausgestaltet sein können. Wird ein solcher Endschalter 31, 32 betätigt, dann kann zufolge der Proportionalität der Motordrehzahl zur Abtriebsdrehzahl die Dreh- bzw. Schwenkbewegung der angetriebenen Teile 15, 18, 40 begrenzt werden.

Fig. 3 zeigt den Längsschnitt entlang der Linie B - B durch das Antriebsgehäuse 20 gemäss Fig. 1 zur Verdeutlichung der Lage der Endschalter 31, 32 und des Schwenkbereiches der Nocke 30.

Es ist ohne weiteres möglich, anstelle des in Fig. 2 dargestellen Gelenkkopfes mit seiner Getriebegestaltung einen anderen, beispielsweise solche nach dem Stand der Technik, einzusetzen, wobei aber die in Fig. 1 und 3 dargestellte Getriebeanordnung innerhalb des gesamten Auslegers 1 beibehalten wird. Umgekehrt kann die Ausbildung des Gelenkkopfes 2 gemäss Fig. 2 auch bei einem anders gestalteten Auslegerarm mit Vorteil eingesetzt werden. Beide Erfindungsgruppen ergänzen sich also funktionelle hervorragend, sind aber voneinander erfindungsmässig unabhängig.

**Stückliste**

1. Ausleger
2. Gelenkkopf
3. Antriebsmotor
4. Antriebsmotor
5.
   Antriebsmotor
6. Kreuzgelenkwelle
7. Kreuzgelenkwelle
8. Kreuzgelenkwelle
9. Schwenkachse
10. Längsachse
11. Antriebswelle
12. Antriebswelle
13. Antriebswelle
14. Ausleger-Ansatzgehäuse
15. Basisgehäuse
16. Zwischenwellen-Achse
17. Gelenkachse
18. Gelenkgehäuse
19. Auslegermittelstück
20. Antriebsgehäuse
21. Endlagerung
22. Endlagerung
23. Endlagerung

24. Zahnriementrieb
25. Zahnriementrieb
26. Zahnriementrieb
27. Kontrollgetriebe
28. Kontrollgetriebe
29. Kontrollgetriebe
30. Schaltnocke
31. Schalter
32. Schalter
33. Welle
34. Kegelrad
35. Kegelrad
36. Zahnriementrieb
37. Kegelrad
38. Kegelrad
39. Untersetzungsgetriebe
40. Tragkörper
41. Hohlwelle
42. Kegelrad
43. Kegelrad
44. Zahnriementrieb
45. Untersetzungsgetriebe
46. Lager
47. Zwischenwelle
47a Wellenteil
47b Wellenteil
48. Lager
49. Lagerschild
50. Doppellager
51. Lagerschild
52. Riemenrad
53. Riemenrad
54. Stützlager
55. Antriebswelle
55a Antriebswellenteil
55b Antriebswellenteil
56. Lager
57. Lager
58. Zahnrad
59. Zahnrad
60. Untersetzungsgetriebe
61. Abtriebswelle
62. Zahnrad
63. Zahnrad
64. Doppellager
65. Abdeckwand
66. Abdeckwand
67. Antriebswelle
68. Welle
69. Lenker
70. Schwenkachse
71. Grundkörper
72. Fundament
73. Schwenkachse
74. Doppellager
75. Quersteg
76. Riemenrad
77. Riemenrad
78. Vorstehendes Lagerteil
79. Hohlwelle
80. Lagerschild
81. Lagerschild
82. Lagerschild
83. Lagerschild

**Patentansprüche**

1. Getriebeanordnung für den Gelenkkopf (2) eines Manipulators, der mit einem Basisgehäuse (15) in einem Ausleger (1) um dessen Längsachse drehbar gelagert ist und der ein quer zur Längsachse gelagertes Gelenkgehäuse (18) aufnimmt, in dem ein bei Streckstellung des Gelenkkopfes (2) koaxial zur Längsachse gelagerter Tragkörper (40) zur Aufnahme des Werkzeuges angeordnet ist. wobei das Basisgehäuse (15), das Gelenkgehäuse (18) und der Tragkörper (40) durch konzentrisch zueinander im Ausleger (1) angeordnete wellen (10, 33, 61) unter Einbeziehung von Untersetzungsgetrieben (39, 45, 60) angetrieben, sowie Zwischengetriebe mit Kegelrädern zum Antrieb des Gelenkgehäuses (18) und des Tragkörpers (40) vorgesehen sind, dadurch gekennzeichnet, dass die Antriebe (11, 12) für das Gelenkgehäuse (18) und den Tragkörper (40) einerseits auf einer Zwischenwelle (47), die parallel zur Schwenkachse (17) des Gelenkgehäuses (18) an der dem Tragkörper (40) abgekehrten Seite im Basisgehäuse (15) gelagert ist, und andererseits auf der Antriebswelle (55) des Gelenkgehäuses (18) verzweigt und diese beiden Wellen (47, 55) als geteilte, gegenseitig gelagerte Wellenteile (47a, 47b, 55a, 55b) ausgebildet sind, und daß die Untersetzungsgetriebe (39, 45, 60) für hohe Untersetzungen (z. B. 70 : 1 bis 120 : 1) am abtriebsseitigen Ende aller Getriebezüge angeordnet sind, und daß ferner an über die Lagerschilde des Basisgehäuses nach außen vorstehenden Wellenzapfen der beiden Wellen (47, 55) Zahnriementriebe (36, 44) in fliegender Anordnung vorgesehen sind.

2. Getriebeanordnung nach Anspruch 1 dadurch gekennzeichnet, dass das Basisgehäuse (15) als in Längsachsenrichtung (10) sich erstreckenden, schlanker Körper, der das Gelenkgehäuse (18) mit den Lagerschilden (49, 51) umgreift, ausgebildet ist.

3. Getriebeanordnung nach einem der beiden Ansprüche 1 oder 2, dadurch gekennzeichnet, dass der jeweils kürzere Wellenteil (47b, 55b) der Zwischenwelle (16, 47) und der die Gelenkachse (17) bildenden Antriebswelle (55) in einem Lagerschild (51) des Basisgehäuses (15) bzw. einem Lagerschild (80) des Gelenkgehäuses (18) über ein Doppellager (50, 64) geführt und das jeweils längere Wellenteil (47a, 55a) im anderen Lagerschild (49 bzw, 81) einfach gelagert und in der Nabe des auf dem kürzeren Wellenteil (47b, 55b) sitzenden Kegelrades (35, 38) abgestützt sind.

4. Getriebeanordnung nach Anspruch 1 oder einem der folgenden, dadurch gekennzeichnet, dass die zum Gelenkgehäuse (18) und zum Tragkörper (40) führenden Antriebswellen (33, 41) mit ihren Kegelrädern (34, 42) über die Achse (16) der Zwischenwelle (47, 47a, 47b) mit daran sitzenden Kegelrädern (35, 43) eine Getriebeverzweigung bilden, deren Zentrum im Kreuzungspunkt der Längsachse (10) und der Zwischenwellen-Achse (16) liegt, wobei der durch die Durchmesser-Differenz der Kegelräder (42, 35) vorhandene Raum für die Anordnung des Doppellagers (50) ausgenutzt ist.

5. Getriebeanordnung nach Anspruch 1 oder einem der folgenden, dadurch gekennzeichnet, dass der den Gelenkkopf (2) tragende Ausleger (1) an der dem Gelenkkopf (2) abgewandten Seite, bezogen auf die Schwenkachse (9) des Auslegers (1), ein als Gegengewicht wirkendes Antriebsgehäuse (20) mit daran angeordneten Antriebsmotoren (3, 4, 5) für das Basisgehäuse (15), das Gelenkgehäuse (18) und den Tragkörper (40) aufweist, wobei die Antriebsmotore (3, 4, 5) mit den Antriebswellen (11, 12, 13) über Kreuzgelenkwellen (6, 7, 8) verbunden sind, von denen die mittlere Kreuzgelenkwelle (7) seitlich an einer die Schwenkachse (9) bildenden und den Ausleger (1) durchsetzenden Welle (68) vorbeigeführt ist.

6. Getriebeanordnung nach Anspruch 5, dadurch gekennzeichnet, dass im Antriebsgehäuse (20) von der Abtriebsdrehzahl der Antriebsmotore (3, 4, 5) abhängige Untersetzungsgetriebe als Kontrollgetriebe (27, 28, 29) vorgesehen sind, deren Abtriebsteile (30) mit Endschaltern (31, 32) verbunden sind.

7. Getriebeanordnung nach Anspruch 6, dadurch gekennzeichnet, dass die Untersetzung der Kontrollgetriebe (27, 29) um einen Differenzbetrag. z. B, 27 % grosser als die der zugeordneten Untersetzungsgetriebe (39, 45, 60) nach den Antriebswellen (67, 55a, 79) ist, einschliesslich der baulich bedingten geringen Unter- oder Übersetzungen an den Zahn- bzw. Kegelrädern und Riementrieben der zugeordneten Getriebeverzweigungen.

8. Getriebeanordnung nach Anspruch 5 oder einem der folgenden, dadurch gekennzeichnet, dass ein das Antriebsgehäuse (20) mit dem Gelenkkopf (2) verbindendes Mittelstück (19) des Auslegers (1) als Leichtbaukörper, z. B. aus Leichtmetallguss, gestaltet ist.

**Claims**

1. Gear arrangement for the joint head (2) of a manipulator which together with a base housing (15) ist rotably mounted in an extension arm (1) around its longitudinal axis and which accommodates a joint housing (18) mounted transverse to the longitudinal axis, in which a carrying body (40) mounted coaxially to the longitudinal axis in the extended position of the joint head is arranged to accommodate the tool, wherein the base housing (15), joint housing (18) and the carrying body (40) are driven by shafts (10, 33, 61) arranged concetrically with respect to one another in the extension arm (1) with the incorporation of reduction gears (39, 45, 60), and intermediate gear mechanisms with conical gears are provided for driving the joint housing (18) and carrying body (40), characterised in that the drivers (11, 12) for the joint housing (18) and the carrying body (40) on one side, an intermediate shaft (47) which is mounted, parallel to the swivelling axis (17) of the joint housing (18), in the base housing (15) on the side remote from the carrying body (40) and on the other side are branched on the drive shaft (55) of the joint housing (18) and these two shafts (47, 55) are designed as divided, oppositely mounted shaft parts (47a, 47b, 55a, 55b) and in that the reduction gears (39, 45, 60) for high gear reductions (e. g. 70 : 1 to 120 : 1) are arranged on the power take-off side of all gear trains, and in that furthermore toothed belt gears (36, 44) are provided in cantilever arrangement on shaft journals of the two shafts (47, 55), which journals project outwards beyond the end shields of the base housing.

2. Gear arrangement according to Claim 1, characterized in that the base housing (15) is formed as a thin body extending in the longitudinal axial direction (10), which encompasses the joint housing (18) with the end shields (49, 51).

3. Gear arrangement according to Claim 1 or 2, characterized in that the in each case shorter shaft part (47b, 55b) of the intermediate shaft (16, 47) and of the drive shaft (55) forming the swivelling axis (17) is guided via a double bearing (50, 64) in an end shield (51) of the base housing (15) and in an end shield (80) of the joint housing (18), and the shaft part longer in each case (47a, 55a) is simply mounted on the other end shield (49 or 81), and are supported in the hub of the conical gear (35, 38) sitting on the shorter shaft part (47b, 55b).

4. Gear arrangement according to Claim 1 or any of the following claims, characterised in that the drive shafts (33, 41) leading to the joint housing (18) and to the carrying body (40) form with their conical gear wheels (34, 42) via the axis (16) of the intermediate shaft (47, 47a, 47b) with conical gear wheels (35, 43) sitting thereon, a gear branching whose centre lies in the intersection point of the longitudinal axis (10) and the intermediate shaft axis (16), the space existing by virtue of the difference in diameters of the conical gear wheels (42, 35) being used to arrange the double bearing (50).

5. Gear arrangement according to Claim 1 or one of the following claims, characterised in that the extension arm (1) carrying the joint head (2) on the side remote from the joint head (82) has, referred to the swivelling axis (9) of the extension arm (1), a drive housing (20) acting as a counterweight with drive motors (3, 4, 5) arranged thereon for the base housing (15), joint housing (18) and the carrying body (40), wherein the drive motors (3, 4, 5) are connected to the drive shafts (11, 12, 13) via universal joint shafts (6, 7, 8), of which the middle universal joint shaft (7) is led past laterally on a shaft (68) forming the swivelling axis (9) and passing through the extension arm (1).

6. Gear arrangement according to Claim 5, characterized in that reduction gears dependent on the power take-off rotational speed of the drive motors (3, 4, 5) are provided in the drive housing (20) as control gears (27, 28, 29), whose power take-off parts (30) are connected to limit switches (31, 32).

7. Gear arrangement according to Claim 6, characterised in that the gear reduction of the control gears (27, 28, 29) is greater by a differential amount, e. g. 27 %, than the gear reduction of the associated reduction gears (39, 45, 60) after the drive shafts (67, 55a, 79), including the structurally determined slight gear reductions or gear ratios on the toothed and conical gear wheels and belt drives of the associated gear branchings.

8. Gear arrangement according to Claim 5 or one of the following Claims, characterized in that a middle piece (19) of the extension arm (1) connecting the drive housing (20) to the joint head (2) is formed as a ligh structural body, e. g. light metal casting.

**Revendications**

1. Mécanisme d'entraînement pour la tête d'articulation (2) d'un manipulateur, qui est montée, au moyen d'un logement de base (15) dans un bras en console (1) de façon à pouvoir tourner autour de l'axe longitudinal de ce dernier et qui loge un carter d'articulation (18) monté transversalement par rapport à l'axe longitudinal et dans lequel l'organe de support (40), monté coaxialement à l'axe longitudinal lorsque la tête d'articulation (2), est dans sa position déployée, et dans lequel le logement de base (15), le carter d'articulation (18) et l'organe de support (40) sont entraînés par des arbres (10, 33, 61) disposés concentriquement les uns par rapport aux autres dans le bras en console (1) moyennant le montage intercalé de mécanismes démultiplicateurs (39, 45, 60) et dans lequel il est prévu des engrenages intermédiaires comportant des pignons coniques servant à entraîner le carter d'articulation (18) et l'organe de support (40), caractérisé par le fait que les dispositifs d'entraînement (11, 12) du carter d'articulation (18) et de l'organe de support (40), d'une part, sont raccordés à un arbre intermédiaire subdivisé (47), qui est monté parallèlement à l'axe de pivotement (17) du carter d'articulation (18) sur le côté tourné à l'opposé de l'organe de support (40) et d'autre part répartis sur l'arbre d'entraînement (55) du carter d'articulation (18), et ces deux arbres (47, 55) sont réalisés sous la forme d'éléments d'arbres subdivisés (47a, 47b, 55a, 55b) en montage opposé, dans le logement de base (15) et que des mécanismes démultiplicateurs (39, 45, 60) servant à fournir des démultiplications élevées (par exemple 70 : 1 à 120 : 1) sont disposés sur l'extrémité, située sur le côté mené, de tous les trains d'engrenages, et, en outre, par le fait que sont prévus sur des bouts d'arbres des deux arbres (47, 55), débordant des flasques porteurs, des transmissions à courroies dentées (36, 44) suivant une disposition volante.

2. Mécanisme d'entraînement suivant la revendication 1, caractérisé par le fait que le logement de base (15) est réalisé sous la forme d'un corps élancé, qui s'étend suivant la direction de l'axe longitudinal (10) et entoure le carter d'articulation (18) au moyen des flasques porteurs (49, 51).

3. Mécanisme d'entraînement suivant la revendication 1 ou 2, caractérisé par le fait que l'élément le plus court (47b, 55b) de l'arbre intermédiaire (16, 47) et de l'arbre d'entraînement (55) constituant l'axe d'articulation (17), sont guidés au moyen d'un palier double (50, 64) dans un flasque porteur (51) du logement de base (15) ou dans un flasque porteur (80) du carter d'articulation (18), et que l'élément d'arbre respectivement le plus long (47a, 55a) est monté simplement dans l'autre flasque porteur (49 ou 81) et prend appui dans le moyeu du pignon (35, 28) monté sur l'élément d'arbre le plus court (47b, 55b).

4. Mécanisme d'entraînement suivant la revendication 1 ou l'une des suivantes, caractérisé par le fait que les arbres d'entraînement (33, 41) aboutissant au carter d'articulation (18) et l'organe de support (40) forment, avec leurs pignons coniques (34, 42), par l'intermédiaire de l'axe (16) de l'arbre intermédiaire (47, 47a, 47b) portant les pignons coniques (35, 43) une ramification de la transmission dont le centre se situe au point d'intersection de l'axe longitudinal (10) et de l'axe (16) de l'arbre intermédiaire, l'espace existant par suite de la différence des diamètres sur les pignons (42, 35) étant utilisé pour loger le palier double (50).

5. Mécanisme d'entraînement suivant la revendication 1 ou l'une des suivantes, caractérisé par le fait que le bras en console (1) portant la tête d'articulation (2) comporte, sur le côté situé à l'opposé de la tête d'articulation (2) par rapport à l'axe de pivotement (9) du bras en console (1), un carter d'engrenage (20) agissant en tant que contrepoids et sur lequel sont montés les moteurs d'entraînement (3, 4, 5) pour le logement de base (15), le carter d'articulation (18) et l'organe de support (40), les moteurs d'entraînement (3, 4, 5) étant reliés aux arbres d'entraînement (11, 12, 13) par l'intermédiaire d'arbres de transmission à joint de cardan (6, 7, 8), parmi lesquels l'arbre médian (7) s'étend à côté d'un arbre (68) formant l'axe de pivotement (9) et traversant le bras en console (1).

6. Mécanisme d'entraînement suivant la revendication 5, caractérisé par le fait qu'il est prévu, dans le carter d'engrenage (20), des engrenages démultiplicateurs dépendant de la vitesse de rotation délivrée par les moteurs d'entraînement (3, 4, 5) et servant de mécanismes de contrôle (27, 28, 29) et dont les parties menées (30) sont reliées à des interrupteurs de fin de course (31, 32).

7. Mécanisme d'entraînement suivant la revendication 6, caractérisé par le fait que la démultiplication des mécanismes de contrôle (27, 28, 29) est supérieure, d'une certaine différence, par exemple 27 %, à la démultiplication des mécanismes démultiplicateurs (39, 45, 60) associés, situés en aval des arbres d'entraînement (67, 55a, 79), y compris les démultiplications ou multiplications faibles, conditionnées par la construction, au niveau des roues dentées ou des pignons coniques et des dispositifs d'entraînement à courroie des ramifications associées du mécanisme.

8. Mécanisme d'entraînement suivant la revendication 5 ou les suivantes, caractérisé par le fait qu'une pièce médiane (19) des bras en console (1), reliant le carter d'engrenage (20) de la tête d'articulation (2), est réalisée sous la forme d'un corps de construction léger, par exemple en une fonte d'un métal léger.

Fig.1

Fig.2

EP 0 054 763 B2

Fig. 2a

Fa. KUKA Schweißanlagen + Roboter GmbH
Europ. Patentanmeldung 81 110 010.6
4. Dezember 1983

Fig. 3

Fig. 4